# EUROPEAN PATENT SPECIFICATION

(11) **EP 4 371 836 B1**
(45) Date of publication and mention of the grant of the patent: **18.02.2026**
(21) Application number: 23203300.1
(22) Date of filing: 12.10.2023
(51) Int. Cl.: B60W 30/09, B60W 30/18

(54) **ENGINE-TORQUE SUPPRESSION APPARATUS OF VEHICLE**
VORRICHTUNG ZUR UNTERDRÜCKUNG DES MOTORDREHMOMENTS EINES FAHRZEUGS
APPAREIL DE SUPPRESSION DE COUPLE MOTEUR DE VÉHICULE

(30) Priority: 15.11.2022 JP 2022182508
(43) Date of publication of application: 22.05.2024
(73) Proprietor: Suzuki Motor Corporation, Hamamatsu-shi, Shizuoka 432-8611 (JP)
(72) Inventor: ISHII, Subaru, HAMAMATSU-SHI, 432-8611 (JP)
(74) Representative: Plasseraud IP

(56) References cited:
- EP-A1- 2 927 082
- US-A1- 2013 297 173
- US-A1- 2021 237 719

## Description

### BACKGROUND OF THE INVENTION

### Field of the Invention

The present invention relates to an engine-torque suppression apparatus of a vehicle.

### Description of the Related Art

In a known accidental start suppression control, when an obstacle is detected in the traveling direction of the own vehicle, the torque to be actually outputted by the engine is reduced below the torque corresponding to the accelerator opening on the condition that the own vehicle is traveling at a low speed or stopped and the operation on the accelerator pedal is rapidly performed by the driver.

In a technique disclosed in Patent Document 1, when obstacles that can be detected by an external sensor are limited to those in a range relatively away from the own vehicle and obstacles (for example, road bumps) near the own vehicle are undetectable, a position of a detected obstacle is stored, and the current relative position of this obstacle with respect to the own vehicle is estimated on the basis of the stored position of this obstacle and the behavior of the own vehicle. In this technique disclosed in Patent Document 1, if there is a possibility of collision with this obstacle, the driver is notified of this possibility and the own vehicle is controlled so as not to approach this obstacle.

[Patent Document 1] JP 2008-094213 A
In the accidental start suppression control, conditions for reducing the engine torque, such as vehicle speed and accelerator opening, are generally set uniformly.

Obstacles with which collision should be avoided include not only preceding vehicles, but also relatively high obstacles such as a wall facing the road and a utility pole, and relatively low obstacles such as wheel chocks in a parking lot, steps on the road and curbstones. The situation in which collision with the obstacle actually becomes a problem differs depending on the type of obstacle.

For example, a situation in which collision with a preceding vehicle becomes a problem is a situation in which the vehicle follows the preceding vehicle, and a situation in which collision with wheel chocks becomes a problem is a situation such as parking and garaging (i.e., parking the vehicle into a garage). In a situation in which the vehicle is following the preceding vehicle, it is required to secure the acceleration necessary for following the preceding vehicle, and reduce the engine torque while there is still distance necessary for avoiding collision with the preceding vehicle. In a situation of parking or garaging, though not much acceleration is required, it is required to finish parking quickly in order to alleviate congestion in the parking lot, so it is permissible to relax the conditions related to vehicle speed to a certain extent.

As described above, in order to suppress unnecessary reduction in engine torque and also reliably avoid collision with an obstacle, it is preferred to appropriately set the conditions for reducing the engine torque depending on the type of obstacle, the situation in which the obstacle is recognized as an object to be avoided, or the like. Document EP2927082A1 relates to a method for suppressing vehicle acceleration from a detection distance between a vehicle and a detected obstacle and from a height distance, when the obstacle is determined to be a high obstacle.

### SUMMARY OF THE INVENTION

An object of the present invention is to provide a vehicular engine-torque suppression apparatus that can reduce engine torque under appropriate conditions in consideration of unnecessary operation.

In order to solve the above-mentioned problem, an engine-torque suppression apparatus of a vehicle according to one aspect of the present invention includes: an obstacle detection unit configured to detect presence of an obstacle in a traveling direction of a vehicle; an obstacle-height detection unit configured to detect height of the obstacle; and an engine-torque suppression unit configured to reduce engine torque to be actually generated by an engine below torque corresponding to an accelerator opening under a predetermined condition when presence of the obstacle is detected by the obstacle detection unit, and differentiate a condition for reducing the engine torque depending on the height of the obstacle detected by the obstacle-height detection unit.

Preferably, the engine-torque suppression unit differentiates the condition for reducing the engine torque between a case where only presence of an obstacle higher than a predetermined height is detected, and a case where only presence of an obstacle lower than the predetermined height is detected. More preferably, in addition to the above cases, the engine-torque suppression unit differentiates the condition also in a case where both presence of an obstacle higher than the predetermined height and presence of an obstacle lower than the predetermined height are detected.

The engine-torque suppression unit may be configured to reduce the engine torque when the accelerator opening is equal to or larger than a predetermined accelerator opening, vehicle speed is equal to or lower than a predetermined vehicle speed, and distance to the obstacle is equal to or shorter than a predetermined distance. In such case, it is preferable that the engine-torque suppression unit differentiates the predetermined accelerator opening, the predetermined vehicle speed, or the predetermined distance according to the detected height of the obstacle.

Preferably, in the case where only presence of an obstacle lower than the predetermined height is detected, the engine-torque suppression unit reduces the predetermined accelerator opening, increase the predetermined vehicle speed, or shorten the predetermined distance, compared to the case where only presence of an obstacle higher than the predetermined height is detected.

Preferably, in the case where only presence of an obstacle lower than the predetermined height is detected, the engine-torque suppression unit reduces the predetermined accelerator opening during driving, increase the predetermined vehicle speed during backward running, or shorten the predetermined distance, compared to the case where only presence of an obstacle higher than the predetermined height is detected.

Preferably, in the case where both presence of an obstacle higher than the predetermined height and presence of an obstacle lower than the predetermined height are detected, the engine torque suppression unit reduces the predetermined accelerator opening as the vehicle is closer to the obstacle; increase the predetermined vehicle speed during backward running, or shorten the predetermined distance, compared to the case where only presence of an obstacle higher than the predetermined height is detected.

Preferably, in the case where both presence of an obstacle higher than the predetermined height and presence of an obstacle lower than the predetermined height are detected, the engine torque suppression unit extends the predetermined distance during backward running as the vehicle speed is lower, compared to the case where only presence of an obstacle lower than the predetermined height is detected.

The engine torque suppression unit may be configured to differentiate the condition for reducing the engine torque between a case where an obstacle lower than a predetermined height is included in obstacles detected by the obstacle-height detection unit, and a case where the obstacle lower than the predetermined height is not included in obstacles detected by the obstacle-height detection unit.

The condition for reducing the engine torque may include that the accelerator opening is equal to or larger than a predetermined accelerator opening. In such case, it is preferable that the engine torque suppression unit reduces the predetermined accelerator opening in a case where the obstacle lower than the predetermined height is included in detected obstacles, compared to a case where the obstacle lower than the predetermined height is not included in the detected obstacles.

The condition for reducing the engine torque may include that vehicle speed is equal to or lower than a predetermined vehicle speed. In such case, it is preferable that the engine torque suppression unit increases the predetermined vehicle speed in a case where the obstacle lower than the predetermined height is included in the detected obstacles, compared to a case where the obstacle lower than the predetermined height is not included in the detected obstacles.

The condition for reducing the engine torque may include that distance to the obstacle is equal to or shorter than a predetermined distance. In such case, it is preferable that the engine torque suppression unit shortens the predetermined distance in a case where the obstacle lower than the predetermined height is included in the detected obstacles, compared to a case where the obstacle lower than the predetermined height is not included in the detected obstacles.

In restart after ignition-off, when presence of the obstacle is not detected by the obstacle detection unit or the vehicle to the obstacle is closer than the predetermined distance, the engine-torque suppression unit may be configured to reduce the engine torque based on a condition different from the predetermined condition.

In such case, it is preferable that the engine-torque suppression unit reduces the engine torque on condition that the vehicle is stopped and the accelerator opening is equal to or larger than an accelerator opening that is defined as an accelerator opening smaller than the predetermined accelerator opening.

Preferably, the engine-torque suppression apparatus of a vehicle further includes a steering angle detection unit configured to detect a steering angle of the vehicle, and in a case where the obstacle detected by the obstacle detection unit includes an obstacle higher than the predetermined height, the engine-torque suppression unit shortens the predetermined distance as the steering angle detected by the steering angle detection unit is larger.

The obstacle detection unit may be an external sensor that has a predetermined viewing field or a predetermined viewing angle, and is installed in a traveling direction of the vehicle. In such case, it is preferable that the engine-torque suppression apparatus of a vehicle further includes an obstacle distance estimation unit configured to estimate distance to the obstacle, and a storage unit configured to store distance estimated by the obstacle distance estimation unit. The obstacle distance estimation unit may be configured to detect the distance to the obstacle based on imaging information acquired from the external sensor when the obstacle is within the viewing field or the viewing angle, and estimate the distance to the obstacle by using detection distance based on the imaging information acquired from the external sensor and travel distance of the vehicle after acquisition of the detection distance when the obstacle is out of the viewing field or the viewing angle.

### EFFECT OF THE INVENTION

According to the present invention, the conditions for reducing the engine torque can be set appropriately depending on the type of obstacle, the situation in which the obstacle is recognized as an object to be avoided, or the like, and thus, the engine torque can be reduced under appropriate conditions in consideration of unnecessary operation.

### BRIEF DESCRIPTION OF THE DRAWINGS

In the accompanying drawings:
Fig. 1 is a schematic diagram illustrating a configuration of an engine-torque suppression apparatus of a vehicle according to one embodiment of the present invention;
Fig. 2 is a flowchart illustrating an overall flow of engine-torque suppression control to be executed by the engine-torque suppression apparatus of the embodiment;
Fig. 3 is a flowchart illustrating contents of torque-reduction condition setting processing (in the step S103) in the engine-torque suppression control;
Fig. 4 is a schematic table illustrating a list of torque-reduction conditions A to D depending on the type of obstacle;
Fig. 5 is a graph illustrating a torque-reduction execution accelerator-opening APOthr in the torque-reduction condition C;
Fig. 6 is a graph illustrating a torque-reduction execution obstacle-distance Dthr in the torque-reduction condition C; and
Fig. 7 is a schematic diagram illustrating a method of estimating an obstacle distance Dobs.

### DETAILED DESCRIPTION

Hereinbelow, embodiments of the present invention will be described by referring to the accompanying drawings.

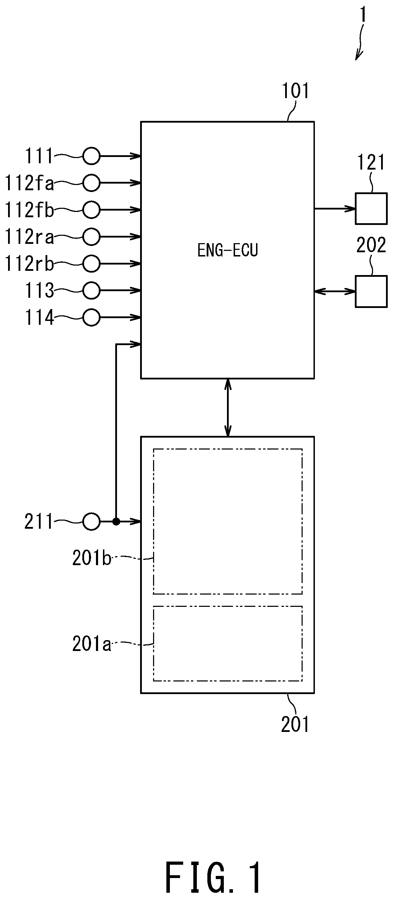

Fig. 1 is a schematic diagram illustrating a configuration of an engine-torque suppression apparatus 1 of a vehicle according to one embodiment of the present invention.

In the present embodiment, the engine-torque suppression apparatus 1 includes an engine controller 101, a front camera 201, and a rear camera 202.

In the present embodiment, the vehicle uses an internal combustion engine (not shown, hereinafter simply referred to as "the engine") as a drive source for traveling. The vehicle may be a hybrid vehicle using an engine and an electric motor as driving sources. The engine controller 101 controls the output of the engine, i.e., the engine torque. Acceleration and deceleration of the vehicle are achieved by controlling the engine torque so as to respond to the driver's operation on the accelerator pedal.

The control targets of the engine controller 101 include a fuel injector 121. The engine controller 101 reads in various sensor output information items related to the engine control, performs predetermined calculation on the basis of these information items, and outputs calculated actuator operation amount to a predetermined engine control device. For example, the engine controller 101 calculates fuel supply amount to be supplied to the engine, and outputs fuel-injector operation amount corresponding to the fuel supply amount to the fuel injector 121. The fuel injector 121 operates depending on the fuel-injector operation amount, and supplies the engine with the fuel, amount of which is dependent on the fuel supply amount.

The engine controller 101 receives as sensor output information used as a basis of calculation: operation amount APO on the accelerator pedal to be detected by an accelerator sensor 111 (hereinafter referred to as "the accelerator opening APO"); a wheel speed WSPfa of a right front wheel to be detected by a first wheel speed sensor 112fa; a wheel speed WSPfb of a left front wheel to be detected by a second wheel speed sensor 112fb; a wheel speed WSPra of a right rear wheel to be detected by a third wheel speed sensor 112ra; a wheel speed WSPrb of a left rear wheel to be detected by a fourth wheel speed sensor 112rb; a vehicle acceleration ACC to be detected by an acceleration sensor 113; and a steering angle STR of the vehicle to be detected by a steering angle sensor 114 (specifically, the rotation angle of the steering handle). The engine controller 101 further receives a start request signal IGN to be outputted by an ignition switch 211. The ignition switch 211 functions as a start switch of a vehicle, and generates and outputs the start request signal IGN in response to the driver's start operation on the vehicle. The start request signal IGN from the ignition switch 211 is inputted to the engine controller 101 as well as the front camera 201 and the rear camera 202 described below. In addition to the above-described information items and signals, the engine controller 101 receives, for example, intake air amount of the engine to be detected by an air flow meter (not shown).

The wheel speeds WSPfa, WSPfb, WSPra, and WSPrb are state parameters correlated with the traveling speed of the vehicle, i.e., vehicle speed VSP. The vehicle speed VSP can be calculated by converting the wheel speed, which is for example the average value of the wheel speeds WSPfa, WSPfb, WSPra, and WSPrb detected by all the wheel speed sensors 112fa, 112fb, 112ra, and 112rb.

The front camera 201 is installed as an external sensor for forward monitoring at a position close to the height of the eyes of the driver, for example, near the upper edge of the front shield of the vehicle. In the present embodiment, the front camera 201 is composed of a monocular camera sensor with a predetermined viewing angle (i.e., angle of view), and images the front viewing field (i.e., front field of view) within the range of the viewing angle. In the present embodiment, the front camera 201 includes: a detection unit 201a provided with an imaging element that images the front viewing field; and a calculation unit 201b provided with a circuit element that performs predetermined calculation on the basis of imaging information such as image information and video information acquired by the detection unit 201a. On the basis of the imaging information from the detection unit 201a, the calculation unit 201b detects: presence of an obstacle in front of the vehicle; height of the obstacle; and the distance from the own vehicle to the obstacle.

In the present embodiment, in addition to the front camera 201 as an external sensor, the rear camera 202 is also provided as an external sensor for rear monitoring. The rear camera 202 can also be composed of a monocular camera sensor having a predetermined viewing angle, similarly to the front camera 201. In the present embodiment, the rear camera 202 has a detection unit and a calculation unit, and is installed on the rear bumper portion or rear-gate garnish portion of the vehicle body so as to image a rear viewing field within the range of the viewing angle, for example.

The output information from the front camera 201 and the rear camera 202, specifically, the presence of an obstacle, the height of the detected obstacle, and the distance to the obstacles are all inputted to the engine controller 101.

The engine controller 101 is configured as an electronic control unit and includes: a central processing unit; various memories; and an input/output interface, for example. The engine controller 101 and the front and rear cameras 201 and 202 (specifically, calculation units of both cameras) are interconnected so as to be able to communicate with each other. The sensor output information to be inputted to one of both sides, such as the wheel speeds WSPfa, WSPfb, WSPra, WSPrb and the acceleration ACC to be inputted to the engine controller 101, can be shared between both sides by, for example, bus communication.

In addition to normal engine control, the engine controller 101 further performs control of avoiding or suppressing collision or contact with an obstacle when detecting the presence of the obstacle in the traveling direction of the vehicle (hereinafter sometimes referred to as "the own vehicle" for distinguishing it from the obstacle). The traveling direction of the vehicle may be the forward direction or the rearward direction.

Specifically, when presence of an obstacle in the traveling direction of the vehicle is detected, on the conditions that: the vehicle is traveling at a low speed or stopped; and the driver's accelerator operation (specifically, depression of the accelerator pedal) is deep enough to be recognized as an erroneous operation, engine-torque suppression control is executed such that the engine torque is suppressed to a predetermined low torque regardless of the accelerator operation by the driver. In the present embodiment, the engine-torque suppression control suppresses the engine torque to a level that does not cause the vehicle to gravitationally slide rearward on an uphill road or gravitationally slide forward on a downhill road.

In the present embodiment, the front camera 201 and the rear camera 202 correspond to "the external sensors" and embody "an obstacle detection unit", "an obstacle-height detection unit", "an obstacle distance estimation unit", and "a storage unit". The engine controller 101 embodies "an engine-torque suppression unit". Further, the steering angle sensor 114 embodies "a steering angle detection unit".

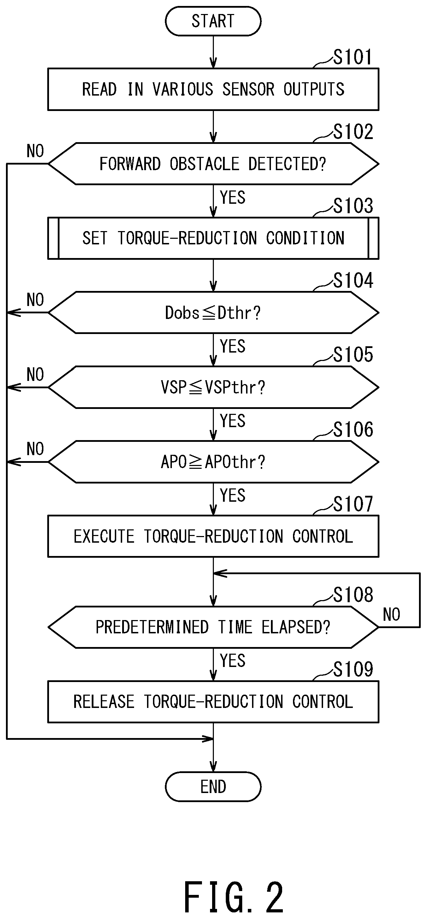

Fig. 2 is a flowchart illustrating an overall flow of the engine-torque suppression control according to the present embodiment. In the present embodiment, the engine-torque suppression control is executed by the engine controller 101 at predetermined intervals after start.

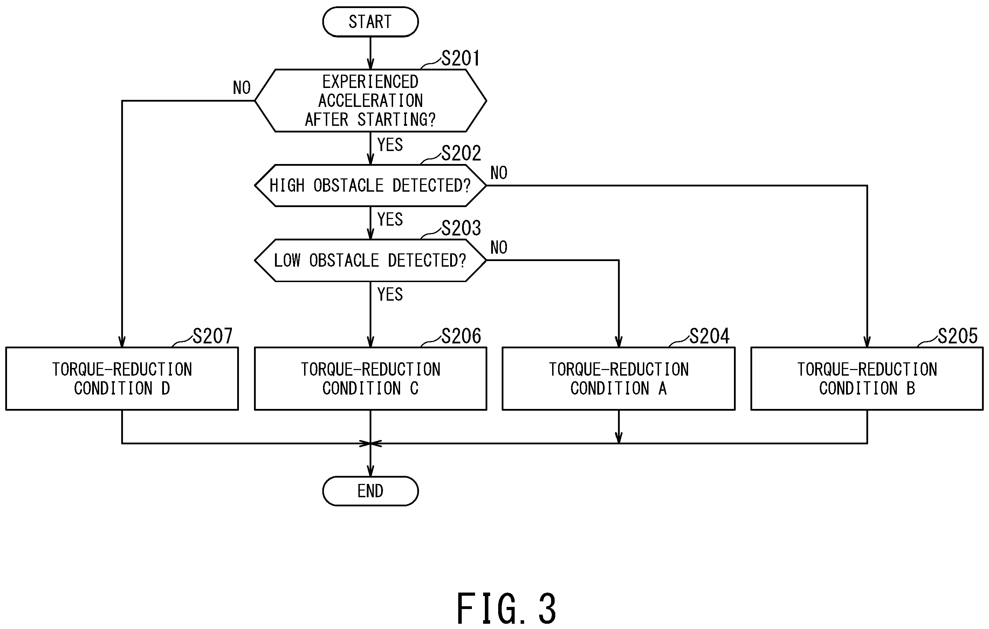

Fig. 3 is a flowchart illustrating contents of torque-reduction condition setting processing in the engine-torque suppression control. The torque-reduction condition setting processing is executed as a subroutine of the engine-torque suppression control by the engine controller 101.

In the step S101, various sensor output information items are read in.

In the step S102, on the basis of the output information from the front camera 201 and the rear camera 202, it is determined whether presence of an obstacle in the traveling direction of the vehicle (for example, in front of or behind the vehicle) is detected or not. If presence of an obstacle is detected, the processing proceeds to the step S103. If presence of an obstacle is not detected, the control in this routine is completed.

In the step S103, conditions to be used for determining whether or not to reduce the engine torque (hereafter referred to as "the torque-reduction conditions") are set. In the present embodiment, the torque-reduction conditions are set as conditions that differ depending on the type of obstacle, the situation in which the obstacle is recognized as an object to be avoided, or the like.

In the step S104, it is determined whether the distance Dobs from the own vehicle to the obstacle (hereafter referred to as "the obstacle distance Dobs") is equal to or shorter than the predetermined distance Dthr defined by the torque-reduction conditions (hereafter sometimes referred to as "the torque-reduction execution obstacle-distance Dthr"). In other words, it is determined whether the own vehicle is at the predetermined distance Dthr from the obstacle or at a position closer than the predetermined distance Dthr from the obstacle. If the obstacle distance Dobs is equal to or shorter than the predetermined distance Dthr, the processing proceeds to the step S105. If the obstacle distance Dobs is longer than the predetermined distance Dthr, the control in this routine is completed.

In the step S105, it is determined whether the vehicle speed VSP is equal to or lower than the predetermined speed VSPthr defined by the torque-reduction conditions (hereinafter sometimes referred to as "the torque-reduction execution vehicle-speed VSPthr"). If the vehicle speed VSP is equal to or lower than the predetermined vehicle speed VSPthr, the processing proceeds to the step S106. If the vehicle speed VSP is higher than predetermined vehicle speed VSPthr, the control in this routine is completed.

In the step S106, it is determined whether the accelerator opening APO is equal to or larger than the predetermined accelerator opening APOthr defined by the torque-reduction conditions (hereinafter sometimes referred to as "the torque-reduction execution accelerator-opening APOthr"). Here, the accelerator opening APO is an index of the load required for the driving source, and when driving is executed by the driver's operation on the accelerator pedal, the deeper the driver depresses the accelerator pedal, the more the accelerator opening increases. If the accelerator opening APO is equal to or larger than the predetermined accelerator opening APOthr, the processing proceeds to the step S107. If the accelerator opening APO is smaller than the predetermined accelerator opening APOthr, the control in this routine is completed.

In the step S107, the engine torque is reduced by executing the torque reduction control. Specifically, the engine torque is reduced to a level below the torque corresponding to the accelerator opening APO. In the present embodiment, the engine torque is reduced to a level that does not cause the vehicle to gravitationally slide on an uphill road due to the torque reduction control.

In the step S108, it is determined whether a predetermined time has elapsed after execution of the torque reduction control or not. If the predetermined time has elapsed, the processing proceeds to the step S109. Otherwise, the torque reduction control is continued until the predetermined time elapses, and the reduced engine torque is maintained. The predetermined time is, for example, 5 seconds.

In the step S109, the torque reduction control is released and the engine torque is return to the torque equivalent to the accelerator opening APO. It is preferred that return of the engine torque is performed gradually.

Moving to Fig. 3, in the step S201, on the basis of the history of the vehicle speed VSP and the start request signal IGN, it is determined whether the vehicle has experienced acceleration after start by turning on the ignition switch 211 or not. In other words, it is determined whether the history from the previous start (i.e., the last start) to the current time includes acceleration experience after start (i.e., history of start) or not. If there is acceleration experience after start, the processing proceeds to the step S202. Otherwise, the processing proceeds to the step S207.

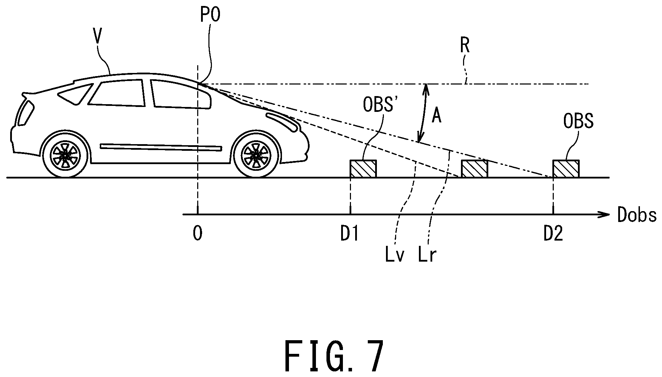

In the step S202, it is determined whether the detected obstacles include an obstacle higher than a predetermined height Hthr or not. If an obstacle higher than the predetermined height Hthr is included, the processing proceeds to the step S203. Otherwise, the processing proceeds to the step S205. In the present embodiment, the predetermined height Hthr can be appropriately set as the height of the position where the external sensor such as the front camera 201 is located or as the height lower than the position of the external sensor. For example, the predetermined height Hthr is set to the height allowing the obstacle to fall outside the range of the viewing angle of the front camera 201 in the course when the own vehicle approaches the obstacle. When the front camera 201 has a wide viewing angle, under the assumption that from the position of the front camera 201 as the base point, a straight line extending in contact with the bonnet of the own vehicle is virtually defined, the predetermined height Hthr may be set so that, in the course when the own vehicle approaches the obstacle, the obstacle can fall within a range below this virtual line, or in the blind spot of the bonnet of the own vehicle (Fig. 7). For example, the predetermined height Hthr is the height of the lower portion or the bottom of the bumper of the vehicle body.

In the step S203, it is determined whether the detected obstacles include an obstacle lower than the predetermined height Hthr or not. If an obstacle lower than the predetermined height Hthr is included, the processing proceeds to the step S206. Otherwise, the processing proceeds to the step S204.

In the step S204, the torque-reduction conditions A are set as conditions for reducing the engine torque when only a high obstacle is included in the detected obstacles (i.e., when only the obstacle higher than the predetermined height Hthr is detected).

In the step S205, the torque-reduction conditions B are set as conditions for reducing the engine torque when only a low obstacle is included in the detected obstacles (i.e., when only the obstacle lower than the predetermined height Hthr is detected).

In the step S206, the torque-reduction conditions C are set as conditions for reducing the engine torque when the detected obstacles include both a high obstacle and a low obstacle (i.e., when both the obstacle higher than the predetermined height Hthr and the obstacle lower than the predetermined height Hthr are detected).

In the step S207, the torque-reduction conditions D are set as conditions for reducing the engine torque at the time of restart after turning off the ignition switch 211.

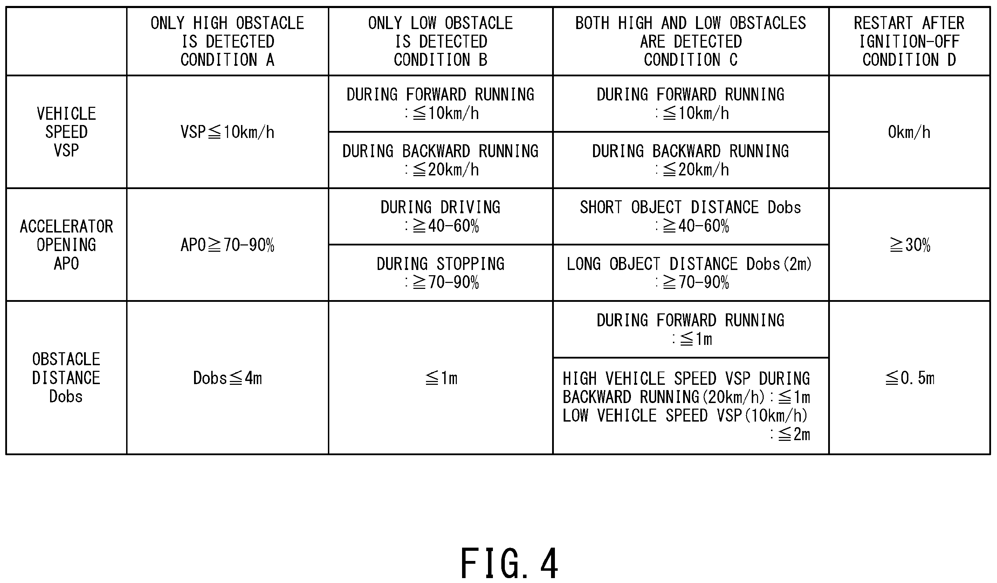

Fig. 4 is a schematic table illustrating a list of the torque-reduction conditions A to D depending on the type of obstacle. The specific numerical values such as vehicle speed VSP shown in Fig. 4 are only cases illustrating the relative magnitude relationship of the numerical values for each of the torque-reduction conditions A to D, but are not intended to provide guidelines or limit numerical values, and are not intended to guarantee the effectiveness of control.

In the torque-reduction conditions A, the obstacle distance Dthr, the vehicle speed VSPthr, and the accelerator opening APOthr to be used as the determination references in the steps S104 to S106 of the flowchart shown in Fig. 2 are set as follows: Dthr = 4 meters; VSPthr = 10 km/h; and APOthr = 70% to 90%.

In the torque-reduction conditions B, the obstacle distance Dthr, the vehicle speed VSPthr, and the accelerator opening APOthr to be used as the determination references in the steps S104 to S106 of the flowchart shown in Fig. 2 are set as follows: Dthr = 1 meter; VSPthr = 10 km/h for forward running; VSPthr = 15 or 20 km/h for backward running; APOthr = 40% to 60% during driving; and APOthr = 70% to 90% during stopping.

In the torque-reduction conditions C, the obstacle distance Dthr, the vehicle speed VSPthr, and the accelerator opening APOthr to be used as the determination references in the steps S104 to S106 of the flowchart shown in Fig. 2 are set as follows: Dthr = 1 meter for forward running; obstacle distance Dthr is set depending on the vehicle speed VSP for backward running; VSPthr = 10 km/h for forward running; VSPthr = 15 or 20 km/h for backward running; and the accelerator opening APOthr is set depending on the obstacle distance Dobs.

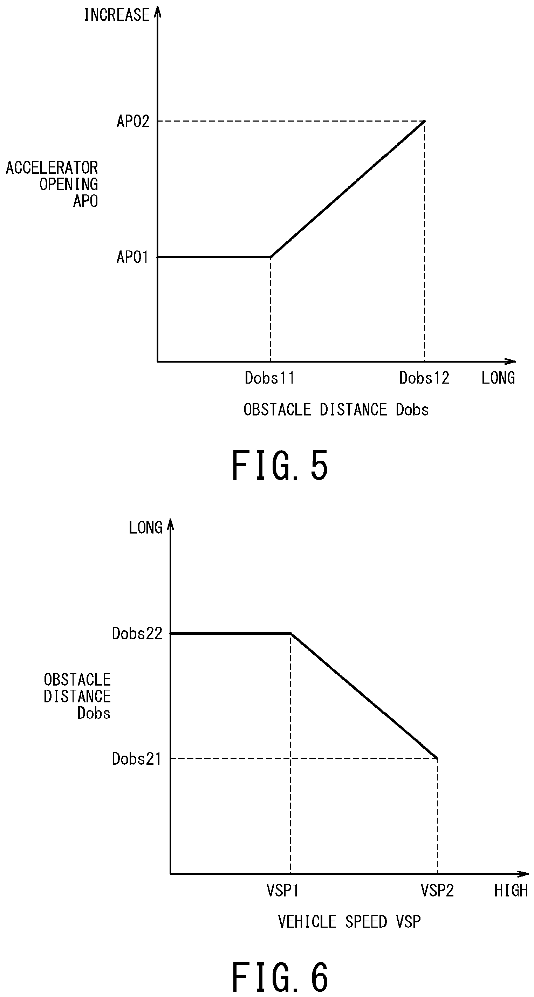

Fig. 5 is a graph illustrating the torque-reduction execution accelerator-opening APOthr in the torque-reduction conditions C.

In the torque-reduction conditions C, the torque-reduction execution accelerator-opening APOthr is set to a first determination accelerator opening APO1 in the range in which the obstacle distance Dobs is equal to or shorter than the predetermined first distance Dobs11, and is set to a second determination accelerator opening APO2 in the range of the obstacle distance Dobs from the first distance Dobs11 to a predetermined second distance Dobs12. The second determination accelerator opening APO2 is larger than the first determination accelerator opening APO1. In the present embodiment, in the range of the obstacle distance Dobs from the first distance Dobs11 to the second distance Dobs12, the torque-reduction execution accelerator-opening APOthr is allocated proportionally between the first determination accelerator opening APO1 and the second determination accelerator opening APO2.

In the present embodiment, as described above, the first distance Dobs11 is 1 meter and the second distance Dobs12 is 2 meters. The first determination accelerator opening APO1 is an opening degree in the range of 40% to 60%, and the second determination accelerator opening APO2 is an opening degree in the range of 70% to 90%.

Fig. 6 is a graph illustrating the torque-reduction execution obstacle-distance Dthr in the torque-reduction conditions C.

In the torque-reduction conditions C, the torque-reduction execution obstacle-distance Dthr is set to a second determination distance Dobs22 in the range in which the vehicle speed VSP is equal to or lower than a predetermined first vehicle speed VSP1, and is set to a first determination distance Dobs21 in the range of the vehicle speed VSP from the first vehicle speed VSP1 to a predetermined second vehicle speed VSP2. The second determination distance Dobs22 is a distance longer than the first determination distance Dobs21. In the present embodiment, in the range from the first vehicle speed VSP1 to the second vehicle speed VSP2, the torque-reduction execution obstacle-distance Dthr is allocated proportionally between the second determination distance Dobs22 and the first determination distance Dobs21.

In the present embodiment as described above, the first vehicle speed VSP1 is 10 km/h, and the second vehicle speed VSP2 is 15 or 20 km/h. The first determination distance Dobs21 is 1 meter, and the second determination distance Dobs22 is 2 meters.

In the torque-reduction conditions D, the obstacle distance Dthr, the vehicle speed VSPthr, and the accelerator opening APOthr to be used as the determination references in the steps S104 to S106 of the flowchart shown in Fig. 2 are set as follows: Dthr = 0.5 meters; VSPthr = 0 km/h; and APOthr = 30%.

Next, a description will be given of the criteria stipulated in each of the torque-reduction conditions A to D.

### (1) Torque-Reduction Conditions A

For example, a preceding vehicle and/or a wall facing the road is assumed as an obstacle higher than the predetermined height Hthr.

The torque-reduction execution vehicle-speed VSPthr is set to 10 km/h. This setting enables execution of the torque reduction control until immediately after start, while at the same time avoiding a situation where the torque reduction control is activated after the vehicle speed VSP exceeds 10 km/h and the vehicle transitions to normal driving.

The torque-reduction execution accelerator-opening APOthr is set within the range of 70% to 90%. This setting avoids frequent execution of the torque reduction control when following a preceding vehicle.

The torque-reduction execution obstacle-distance Dthr is set to 4 meters. This setting avoids a situation where the torque reduction control is activated at the time of shortening the distance to the obstacle (e.g., preceding vehicle) and thereby the following-up to the preceding vehicle is hindered, and also secures sufficiently long distance from the obstacle for avoiding immediate collision with the obstacle after execution of the torque reduction control.

### (2) Torque-Reduction Conditions B

For example, wheel chocks in a parking lot and/or steps in the road are assumed as obstacles lower than the predetermined height Hthr.

The torque-reduction execution vehicle-speed VSPthr is set to 10 km/h for forward running, and is set to 15 km/h or 20 km/h for backward running so that the conditions are adapted to the situation at the time of backward running in terms of vehicle speed. Specifically, during backward running, it is conceivable that the driver does not notice the presence of a low obstacle such as wheel chocks, so the torque-reduction execution vehicle-speed VSPthr is increased more than that during forward running, and thereby the conditions for the torque reduction control are relaxed. Although 20 km/h is given as one aspect, it is rare to reach this 20 km/h during backward running, and the torque-reduction execution vehicle-speed VSPthr for backward running may be a vehicle speed lower than 20 km/h in a higher range than that during forward running and may be 15 km/h, for example.

The torque-reduction execution accelerator-opening APOthr is set in the range of 70% to 90% when the vehicle is stopped, and is set in the range of 40% to 60% during driving. This setting enables execution of the torque reduction control even under a relatively small accelerator opening as long as it does not excessively affect driving during parking, and thus prevent the vehicle from having inertia to run over low obstacles such as wheel chocks and steps. When the vehicle is stopped, execution of the torque reduction control is allowed only under a relatively large accelerator opening, which avoids a situation where the startability is excessively impaired. Even if a lower obstacle which is not classified as an obstacle to be avoided in terms of collision avoidance is detected, the engine torque is generated until it reaches a relatively large accelerator opening, and thus, the vehicle can run over this obstacle and continue running.

The torque-reduction execution obstacle-distance Dthr is set to 1 meter. This setting avoids a situation where the torque reduction control is activated despite being away from the wheel chocks and thereby smooth parking of the vehicle is hindered, for example. When the vehicle approaches the obstacle, the conditions for the vehicle speed and the accelerator opening are relaxed, and thus, the torque reduction control is actively implemented so as to prevent the vehicle from colliding against the obstacle with excessive momentum.

### (3) Torque-Reduction Conditions C

As a case where both an obstacle higher than the predetermined height Hthr and another obstacle lower than the predetermined height Hthr are detected, for example, it is assumed that there is a building or a wall separating sites (i.e., high obstacle) behind the wheel chocks (i.e., low obstacle) in a parking lot.

The torque-reduction execution vehicle-speed VSPthr is set to 10 km/h for forward running, and is set to 15 km/h or 20 km/h for backward running. This setting enables execution of the torque reduction control even at a higher vehicle speed when the driver continues to depress the accelerator pedal and the vehicle approaches the wheel chocks despite presence of the building and/or the wall, and thus avoids a situation where the vehicle is not stopped but runs over the wheel chocks.

The torque-reduction execution accelerator-opening APOthr is set between 70% and 90% at a distance of 2 meters from the obstacle (for example, wheel chocks), and is decreased as the vehicle approaches the obstacle to be in a range of 40% to 60% at a distance of 1 meter from the obstacle or closer to the obstacle. while the vehicle is at some distance away from the wheel chocks, this setting suppresses execution of the torque reduction control and allows acceleration by generating the engine torque, assuming that the driver is aware of the building or the wall and such recognition is reliable. When the driver continues to depress the accelerator pedal even after the vehicle approaches the wheel chocks, this setting relaxes the conditions related to the accelerator opening, and enables execution of the torque reduction control at a relatively small accelerator opening so as to avoid a situation where the vehicle gains more momentum.

The torque-reduction execution obstacle-distance Dthr is set to 1 meter during forward running, while during backward running being shortened as the vehicle speed VSP becomes higher. Specifically, during backward running, it is set to 2 meters at the vehicle speed VSP of 10 km/h or lower, shortened as the vehicle speed VSP increases, and set to 1 meter at the vehicle speed VSP of 15 km/h or 20 km/h. In the case of a parking lot, while the torque reduction control is basically executed at the timing when the vehicle approaches the obstacles (wheel chocks), such setting enables execution of the torque reduction control even if the vehicle is away from the wheel chocks at a relatively low vehicle speed, and thereby suppresses sudden acceleration at a position away from the wheel chocks. Further, such setting also avoids a situation where the vehicle is increased in vehicle speed before approaching the obstacle by accelerating at an accelerator opening smaller than 70%, and fails to stop at the wheel chocks but to run over the wheel chocks even the torque reduction control is executed.

### (4) Torque-Reduction Conditions D

It is assumed that the vehicle is stopped when restart after the ignition switch 211 is turned off.

The torque-reduction execution vehicle-speed VSPthr is set to 0 km/h.

The torque-reduction execution accelerator-opening APOthr is set to 30%, and the torque-reduction execution obstacle-distance Dthr is set to 0. 5 meters. Considering that it is rare to actively shorten the distance to the obstacle at the time of start from a stopped state, the above-described setting allows execution of the torque reduction control only in the case of having short distance between the own vehicle and the obstacle, and additionally, the conditions for the accelerator opening is relaxed, which consequently avoids a situation where the engine torque is generated despite short distance to the obstacle and the vehicle collides with the obstacle.

In the restart after ignition-off (i.e., turning of the ignition), if the vehicle speed VSP is higher than 0 km/h, under the assumption that an experience of start is included in the history from the restart to the current time and there is already an acceleration experience, the processing proceeds from the step S201 to the step S202 in the flowchart shown in Fig. 3, and thereby, one of the torque-reduction conditions A to C is set.

The calculation unit of each of the front camera 201 and the rear camera 202 includes a memory that can store the calculation result and retain the calculation result after the ignition switch 211 is turned off. For a low obstacle that deviates from the range of the viewing angle as the vehicle approaches this low obstacle, the obstacle distance Dobs is detected in the following manner.

Fig. 7 is a schematic diagram illustrating a method of estimating the obstacle distance Dobs. The obstacles OBS and OBS' are respectively at different relative distances D1 and D2 from the own vehicle V. It is assumed that the obstacle OBS being at the position of the relative distance D2 at the time point t1 moves to the position (obstacle OBS') of the relative distance D1 at the time point t2 after the time point t1 due to the advance of the own vehicle V.

In Fig. 7, the viewing field range R that can be imaged by the front camera 201 is indicated by a two-dot chain line, and the viewing angle for this viewing field range R is an angle A in the vertical direction.

In Fig. 7, the lower outer edge defining the viewing field range R of the front camera 201 (i.e., lower edge of the viewing field range R) is indicated by a two-dot chain line Lr, and the virtual line extending in contact with the bonnet of the own vehicle V with the position P0 of the front camera 201 as a base point is indicated by a dashed line Lv. Although the upper edge of the viewing field range R is in the horizontal direction in Fig. 7, the viewing field range R is not limited to such an aspect and may be inclined upward or downward with respect to the horizontal direction.

Although the obstacle OBS is within the viewing angle A of the front camera 201 at time point t1, the obstacle OBS is out of the range of this viewing angle A at the time point t2. Thus, the distance D1 of the obstacle OBS' at the current time point (i.e., at the time point t2) cannot be detected from the imaging information acquired by the front camera 201. This holds true for the case where the viewing angle A of the front camera 201 is wide, and the obstacle OBS is included within the blind spot of the bonnet in the course when the own vehicle approaches the obstacle OBS. The obstacle OBS substantially deviates from the viewing field range R of the front camera 201 by being included in the blind spot of the bonnet.

The calculation unit 201b of the front camera 201 detects the distance D2 of the obstacle OBS at the timing when presence of the obstacle OBS is detected, and also detects the travel distance of the own vehicle after detecting the presence of the obstacle OBS, and then estimates the distance D1 of the current obstacle OBS' by subtracting this travel distance from the obstacle distance D2. The travel distance of the own vehicle can be calculated on the basis of the vehicle speed and the time length required for traveling.

The engine-torque suppression apparatus 1 of the vehicle according to the present embodiment has the above-described configuration. The effects to be obtained by the present embodiment is described below.

Objects to be recognized as obstacles that cause a problem of colliding with the own vehicle are not uniformly at the same height or approximately the same height but include: relatively high obstacles such as a preceding vehicle and a wall facing the road; and relatively low obstacles such as wheel chocks in a parking lot, steps on the road, and curbstones. Different types (size and height) of obstacles are recognized as objects to be avoided in different situations.

Firstly, in the present embodiment, presence of an obstacle in the traveling direction of the vehicle is detected, the height of the detected obstacle is also detected, and then the conditions (i.e., torque-reduction conditions A to D) for reducing the actual engine torque below the torque level corresponding to the accelerator opening are differentiated depending on the height of the obstacle in the case of detecting the presence of an obstacle. Such configuration can reduce the engine torque at an appropriate timing under the appropriate conditions in accordance with the type of obstacle, the situation in which the obstacle is recognized as an object to be avoided, or the like.

Secondly, the conditions for reducing the engine torque are differentiated between: the case where only a high obstacle is detected; the case where only a low obstacle is detected; and the case where both the high obstacle and the low obstacle are detected, and consequently, the engine torque can be reduced at a more appropriate timing under more appropriate conditions in accordance with the situation in which the obstacle is recognized as an object to be avoided.

Specifically, as the case where both high and low obstacles are detected, for example, the above-described condition-setting can avoid a situation in parking where a building or a wall separating sites exists behind the wheel chocks and the driver unnecessarily reduces the engine torque at a position away from the obstacles (i.e., wheel chocks) as a result of being too conscious of the wall, which may cause stagnation in parking despite a high possibility that the presence of the obstacles can be recognized.

Thirdly, in the case where only a low obstacle is detected, the accelerator opening is reduced, the vehicle speed is increased, or the distance to the obstacles is shortened for reducing the engine torque, compared to the case where only a high obstacle is detected. Hence, when a low obstacle is recognized, the engine torque can be reduced at an appropriate timing under appropriate conditions that conform to the situation.

Specifically, in the case where the low obstacles are, for example, wheel chocks in a parking lot, it is assumed that the driver is unaware of their existence. Even in such a case, the engine torque can be reduced even at a smaller accelerator opening or higher vehicle speed (i.e., by relaxing the conditions on the accelerator opening and the vehicle speed), and consequently, acceleration due to erroneous operation on the accelerator pedal by the driver can be avoided more positively. Further, reducing the engine torque at the timing close to the wheel chocks can avoid a situation where the engine torque is unnecessarily reduced despite a far distance from the wheel chocks, which may cause parking stagnation.

Fourthly, in the case where both high and low obstacles are recognized, the engine torque can be reduced at an appropriate timing under appropriate conditions that conform to the situation.

Specifically, as an example in which both high and low obstacles are detected, in the case where a building or a wall separating sites exists behind the wheel chocks, there is a high possibility that the driver recognizes the presence of the obstacles due to the presence of the wall, and thus, the accelerator operation by the driver is reliable. In such a case, reduction in engine torque is suppressed to secure acceleration while the vehicle is away from the obstacles, and the reduction is executed even at a smaller accelerator opening at a higher vehicle speed while the vehicle is close to the obstacles, and thus, a situation where the vehicle collides against the wheel chocks with strong momentum and runs over the wheel chocks can be avoided.

During running backward, the engine torque is more reduced at the time when approaching the obstacle as the vehicle speed is higher, and thus, collision with the obstacle (wheel chocks) can be avoided and speedy driving during parking can be urged.

Fifthly, in the restart after ignition-off, if presence of an obstacle is not detected or the vehicle is at a position relatively close to the obstacle, the conditions for reducing the engine torque are differentiated from the above-described predetermined conditions, and thus, appropriate conditions can be set for ensuring satisfactory startability from a viewpoint different from collision avoidance with the obstacle.

In the restart after ignition-off, when the own vehicle is stopped and particularly close to the obstacle, reduction in engine torque is enabled even at a smaller accelerator opening, and such control can secure the engine torque necessary for starting the vehicle, and avoid a situation where the own vehicle runs over the obstacle (e.g., wheel chocks near the front of the own vehicle) by acceleration at the time of start.

Sixthly, the distance from the own vehicle to the obstacle can be estimated, and the estimated distance can be stored in the storage unit. Under such a configuration, even when the obstacle is out of the range of the viewing angle of the front camera 201 or the rear camera 202 and the presence of the obstacle cannot be detected directly, the distance to the obstacle can be grasped, and thus, whether or not each condition for reducing the engine torque is satisfied can be appropriately determined.

Although not described above, the engine-torque suppression apparatus 1 may be configured to set the torque-reduction execution obstacle-distance Dthr to be shorter for a larger steering angle STR detected by the steering angle sensor 114, when obstacles detected by the front camera 201 or the rear camera 202 include an obstacle higher than the predetermined height Hthr. For example, reduction in the torque-reduction execution obstacle-distance Dthr is achieved by setting a coefficient that is smaller than 1 and tends to decrease as the steering angle STR increases, and multiplying this coefficient by the torque-reduction execution obstacle-distance Dthr obtained in the case of setting the torque-reduction conditions A and C.

In the case where the detected obstacles include a high obstacle and the steering angle is changed, it is assumed or presumed that the driver of the vehicle is trying to avoid the obstacle by steering. In such a case, by shortening the torque-reduction execution obstacle-distance Dthr as the steering angle STR detected by the steering angle sensor 114 is larger, the engine torque is not reduced while the vehicle is relatively away from the obstacle, but reduced at the timing at which the vehicle approaches the obstacle. Consequently, a situation where reduction in engine torque adversely affects obstacle avoidance can be avoided.

In the above-described embodiments, a monocular camera sensor is adopted as the external sensor. The external sensor that can be used in each embodiment is not limited to a monocular camera sensor but may be a stereo camera sensor or an external sensor other than a camera. In other words, the external sensor to be used in each embodiment is achieved by an arbitrary external sensor as long as it can output information contributing to determination of the type of obstacle, especially the height of the obstacle.

### REFERENCE SIGNS LIST

- 1: engine-torque suppression apparatus of a vehicle
- 101: engine controller
- 111: accelerator-opening sensor
- 112fa: first wheel speed sensor for a right front wheel
- 112fb: second wheel speed sensor for a left front wheel
- 112ra: third wheel speed sensor for a right rear wheel
- 112rb: fourth wheel speed sensor for a left rear wheel
- 113: acceleration sensor
- 114: steering angle sensor
- 121: fuel injector
- 201: front camera (external sensor)
- 201a: detection unit of a front camera
- 201b: calculation unit of a front camera
- 202: rear camera (external sensor)
- 211: ignition switch (start switch)
- V: vehicle (own vehicle)
- R: viewing field of a front camera
- A: viewing angle of a front camera
- OBS: obstacle

## Claims

1. An engine-torque suppression apparatus (1) of a vehicle comprising:
an obstacle detection unit (201, 202) configured to detect presence of an obstacle in a traveling direction of a vehicle;
an obstacle-height detection unit (201, 202) configured to detect height of the obstacle; and
an engine-torque suppression unit (101) configured to
reduce engine torque to be actually generated by an engine below torque corresponding to an accelerator opening under a predetermined condition when presence of the obstacle is detected by the obstacle detection unit, and
differentiate a condition for reducing the engine torque depending on the height of the obstacle detected by the obstacle-height detection unit.

2. The engine-torque suppression apparatus (1) of a vehicle according to claim 1, wherein the engine-torque suppression unit (101) is configured to differentiate the condition for reducing the engine torque between:
a case where only presence of an obstacle higher than a predetermined height is detected;
a case where only presence of an obstacle lower than the predetermined height is detected; and
a case where both presence of an obstacle higher than the predetermined height and presence of an obstacle lower than the predetermined height are detected.

3. The engine-torque suppression apparatus (1) of a vehicle according to claim 2,
wherein the engine-torque suppression unit (101) is configured to reduce the engine torque when: the accelerator opening is equal to or larger than a predetermined accelerator opening; vehicle speed is equal to or lower than a predetermined vehicle speed; and distance to the obstacle is equal to or shorter than a predetermined distance, and
wherein, in the case where only presence of an obstacle lower than the predetermined height is detected, the engine-torque suppression unit (101) is configured to: reduce the predetermined accelerator opening; increase the predetermined vehicle speed; or shorten the predetermined distance, compared to the case where only presence of an obstacle higher than the predetermined height is detected.

4. The engine-torque suppression apparatus (1) of a vehicle according to claim 3, wherein, in the case where only presence of an obstacle lower than the predetermined height is detected, the engine-torque suppression unit (101) is configured to: reduce the predetermined accelerator opening during driving; increase the predetermined vehicle speed during backward running; or shorten the predetermined distance, compared to the case where only presence of an obstacle higher than the predetermined height is detected.

5. The engine-torque suppression apparatus (1) of a vehicle according to any one of claim 2 to claim 4, wherein, in the case where both presence of an obstacle higher than the predetermined height and presence of an obstacle lower than the predetermined height are detected, the engine torque suppression unit (101) is configured to: reduce the predetermined accelerator opening as the vehicle is closer to the obstacle; increase the predetermined vehicle speed during backward running; or shorten the predetermined distance, compared to the case where only presence of an obstacle higher than the predetermined height is detected.

6. The engine-torque suppression apparatus (1) of a vehicle according to any one of claim 2 to claim 5, wherein, in the case where both presence of an obstacle higher than the predetermined height and presence of an obstacle lower than the predetermined height are detected, the engine torque suppression unit (101) is configured to extend the predetermined distance during backward running as the vehicle speed is lower, compared to the case where only presence of an obstacle lower than the predetermined height is detected.

7. The engine-torque suppression apparatus (1) of a vehicle according to claim 1, wherein the engine torque suppression unit (101) is configured to differentiate the condition for reducing the engine torque between:
a case where an obstacle lower than a predetermined height is included in obstacles detected by the obstacle-height detection unit; and
a case where the obstacle lower than the predetermined height is not included in obstacles detected by the obstacle-height detection unit (201, 202).

8. The engine-torque suppression apparatus (1) of a vehicle according to claim 7, wherein:
the condition for reducing the engine torque includes that the accelerator opening is equal to or larger than a predetermined accelerator opening; and
the engine torque suppression unit (101) is configured to reduce the predetermined accelerator opening in a case where the obstacle lower than the predetermined height is included in detected obstacles, compared to a case where the obstacle lower than the predetermined height is not included in the detected obstacles.

9. The engine-torque suppression apparatus (1) of a vehicle according to claim 7 or claim 8, wherein:
the condition for reducing the engine torque includes that vehicle speed is equal to or lower than a predetermined vehicle speed; and
the engine torque suppression unit (101) is configured to increase the predetermined vehicle speed in a case where the obstacle lower than the predetermined height is included in the detected obstacles, compared to a case where the obstacle lower than the predetermined height is not included in the detected obstacles.

10. The engine-torque suppression apparatus (1) of a vehicle according to any one of claim 7 to claim 9, wherein:
the condition for reducing the engine torque includes that distance to the obstacle is equal to or shorter than a predetermined distance; and
the engine torque suppression unit (101) is configured to shorten the predetermined distance in a case where the obstacle lower than the predetermined height is included in the detected obstacles, compared to a case where the obstacle lower than the predetermined height is not included in the detected obstacles.

11. The engine-torque suppression apparatus (1) of a vehicle according to claim 3, wherein, in restart after ignition-off, when presence of the obstacle is not detected by the obstacle detection unit (201, 202)or the vehicle to the obstacle is closer than the predetermined distance, the engine-torque suppression unit reduces the engine torque based on a condition different from the predetermined condition.

12. The engine-torque suppression apparatus (1) of a vehicle according to claim 3, wherein, in restart after ignition-off, when presence of the obstacle is not detected by the obstacle detection unit (201, 202) or the vehicle to the obstacle is closer than the predetermined distance, the engine-torque suppression unit (101) reduces the engine torque on condition that the vehicle is stopped and the accelerator opening is equal to or larger than an accelerator opening that is defined as an accelerator opening smaller than the predetermined accelerator opening.

13. The engine-torque suppression apparatus (1) of a vehicle according to claim 3, further comprising a steering angle detection unit (114) configured to detect a steering angle of the vehicle,
wherein, in a case where the obstacle detected by the obstacle detection unit (201, 202) includes an obstacle higher than the predetermined height, the engine-torque suppression unit (101) shortens the predetermined distance as the steering angle detected by the steering angle detection unit (114) is larger.

14. The engine-torque suppression apparatus (1) of a vehicle according to any one of claim 1 to claim 13, further comprising: an obstacle distance estimation unit (201, 202) configured to estimate distance to the obstacle; and a storage unit (201, 202) configured to store distance estimated by the obstacle distance estimation unit (201, 202), wherein:
the obstacle detection unit (201, 202) is an external sensor that has a predetermined viewing field or a predetermined viewing angle and is installed in a traveling direction of the vehicle; and
the obstacle distance estimation unit (201, 202) is configured to
detect the distance to the obstacle based on imaging information acquired from the external sensor when the obstacle is within the viewing field or the viewing angle and
estimate the distance to the obstacle by using detection distance based on the imaging information acquired from the external sensor and travel distance of the vehicle after acquisition of the detection distance when the obstacle is out of the viewing field or the viewing angle.

## Patentansprüche

1. Vorrichtung zur Unterdrückung des Motordrehmoments (1) eines Fahrzeugs, umfassend:
eine Hinderniserfassungseinheit (201, 202), welche dazu eingerichtet ist, eine Anwesenheit eines Hindernisses in einer Fahrtrichtung eines Fahrzeugs zu erfassen;
eine Hindernishöhe-Erfassungseinheit (201, 202), welche dazu eingerichtet ist, eine Höhe des Hindernisses zu erfassen; und
eine Motordrehmoment-Unterdrückungseinheit (101), welche eingerichtet ist zum
Reduzieren eines Motordrehmoments, welches durch einen Motor tatsächlich generiert werden soll, unter ein Drehmoment, welches einer Gasöffnung unter einer vorbestimmten Bedingung entspricht, wenn eine Anwesenheit des Hindernisses durch die Hinderniserfassungseinheit erfasst wird, und
Unterscheiden einer Bedingung zum Reduzieren des Motordrehmoments in Abhängigkeit von der Höhe des Hindernisses, welches durch die Hinderniserfassungseinheit erfasst wird.

2. Vorrichtung zur Unterdrückung des Motordrehmoments (1) eines Fahrzeugs nach Anspruch 1, wobei die Motordrehmoment-Unterdrückungseinheit (101) dazu eingerichtet ist, die Bedingung zum Reduzieren des Motordrehmoments zu unterscheiden zwischen
einem Fall, in welchem nur eine Anwesenheit eines Hindernisses erfasst wird, welches höher als eine vorbestimmte Höhe ist;
einem Fall, in welchem nur eine Anwesenheit eines Hindernisses erfasst wird, welches niedriger als die vorbestimmte Höhe ist; und
einem Fall, in welchem sowohl eine Anwesenheit eines Hindernisses, welches höher als die vorbestimmte Höhe ist, als auch eine Anwesenheit eines Hindernisses erfasst werden, welches niedriger als die vorbestimmte Höhe ist.

3. Vorrichtung zur Unterdrückung des Motordrehmoments (1) eines Fahrzeugs nach Anspruch 2, wobei die Motordrehmoment-Unterdrückungseinheit (101) dazu eingerichtet ist, das Motordrehmoment zu reduzieren, wenn die Gasöffnung gleich wie oder größer als eine vorbestimmte Gasöffnung ist; eine Fahrzeuggeschwindigkeit gleich wie oder niedriger als eine vorbestimmte Fahrzeuggeschwindigkeit ist; und ein Abstand zu dem Hindernis gleich wie oder kürzer als ein vorbestimmter Abstand ist, und
wobei in dem Fall, in welchem nur eine Anwesenheit eines Hindernisses erfasst wird, welches niedriger als die vorbestimmte Höhe ist, die Motordrehmoment-Unterdrückungseinheit (101) dazu eingerichtet ist, die vorbestimmte Gasöffnung zu reduzieren; die vorbestimmte Fahrzeuggeschwindigkeit zu erhöhen; oder den vorbestimmten Abstand zu verkürzen, im Vergleich zu dem Fall, in welchem nur eine Anwesenheit eines Hindernisses erfasst wird, welches höher als die vorbestimmte Höhe ist.

4. Vorrichtung zur Unterdrückung des Motordrehmoments (1) eines Fahrzeugs nach Anspruch 3, wobei in dem Fall, in welchem nur eine Anwesenheit eines Hindernisses erfasst wird, welches niedriger als die vorbestimmte Höhe ist, die Motordrehmoment-Unterdrückungseinheit (101) dazu eingerichtet ist, während eines Fahrens die vorbestimmte Gasöffnung zu reduzieren; während eines Rückwärtsfahrens die vorbestimmte Fahrzeuggeschwindigkeit zu erhöhen; oder den vorbestimmten Abstand zu verkürzen, im Vergleich zu dem Fall, in welchem nur eine Anwesenheit eines Hindernisses erfasst wird, welches höher als die vorbestimmte Höhe ist.

5. Vorrichtung zur Unterdrückung des Motordrehmoments (1) eines Fahrzeugs nach einem der Ansprüche 2 bis 4, wobei in dem Fall, in welchem sowohl eine Anwesenheit eines Hindernisses, welches höher als die vorbestimmte Höhe ist, als auch eine Anwesenheit eines Hindernisses erfasst werden, welches niedriger als die vorbestimmte Höhe ist, die Motordrehmoment-Unterdrückungseinheit (101) dazu eingerichtet ist, die vorbestimmte Gasöffnung zu reduzieren, wenn das Fahrzeug näher an dem Hindernis ist; während eines Rückwärtsfahrens die vorbestimmte Fahrzeuggeschwindigkeit zu erhöhen; oder den vorbestimmten Abstand zu verkürzen, im Vergleich zu dem Fall, in welchem nur eine Anwesenheit eines Hindernisses erfasst wird, welches höher als die vorbestimmte Höhe ist.

6. Vorrichtung zur Unterdrückung des Motordrehmoments (1) eines Fahrzeugs nach einem der Ansprüche 2 bis 5, wobei in dem Fall, in welchem sowohl eine Anwesenheit eines Hindernisses, welches höher als die vorbestimmte Höhe ist, als auch eine Anwesenheit eines Hindernisses erfasst werden, welches niedriger als die vorbestimmte Höhe ist, die Motordrehmoment-Unterdrückungseinheit (101) dazu eingerichtet ist, den vorbestimmten Abstand während eines Rückwärtsfahrens zu verlängern, wenn die Fahrzeuggeschwindigkeit niedriger ist, im Vergleich zu dem Fall, in welchem nur eine Anwesenheit eines Hindernisses erfasst wird, welches niedriger als die vorbestimmte Höhe ist.

7. Vorrichtung zur Unterdrückung des Motordrehmoments (1) eines Fahrzeugs nach Anspruch 1, wobei die Motordrehmoment-Unterdrückungseinheit (101) dazu eingerichtet ist, die Bedingung zum Reduzieren des Motordrehmoments zu unterscheiden zwischen
einem Fall, in welchem ein Hindernis, welches niedriger als eine vorbestimmte Höhe ist, in Hindernissen umfasst ist, welche durch die Hindernishöhe-Erfassungseinheit erfasst werden; und
einem Fall, in welchem das Hindernis, welches niedriger als die vorbestimmte Höhe ist, nicht in Hindernissen umfasst ist, welche durch die Hindernishöhe-Erfassungseinheit (201, 202) erfasst werden.

8. Vorrichtung zur Unterdrückung des Motordrehmoments (1) eines Fahrzeugs nach Anspruch 7, wobei
die Bedingung zum Reduzieren des Motordrehmoments umfasst, dass die Gasöffnung gleich wie oder größer als eine vorbestimmte Gasöffnung ist; und
die Motordrehmoment-Unterdrückungseinheit (101) dazu eingerichtet ist, die vorbestimmte Gasöffnung in einem Fall zu reduzieren, in welchem das Hindernis, welches niedriger als die vorbestimmte Höhe ist, in erfassten Hindernissen umfasst ist, im Vergleich zu einem Fall, in welchem das Hindernis, welches niedriger als die vorbestimmte Höhe ist, nicht in den erfassten Hindernissen umfasst ist.

9. Vorrichtung zur Unterdrückung des Motordrehmoments (1) eines Fahrzeugs nach Anspruch 7 oder Anspruch 8, wobei
die Bedingung zum Reduzieren des Motordrehmoments umfasst, dass eine Fahrzeuggeschwindigkeit gleich wie oder niedriger als eine vorbestimmte Fahrzeuggeschwindigkeit ist; und
die Motordrehmoment-Unterdrückungseinheit (101) dazu eingerichtet ist, die vorbestimmte Fahrzeuggeschwindigkeit in einem Fall zu erhöhen, in welchem das Hindernis, welches niedriger als die vorbestimmte Höhe ist, in den erfassten Hindernissen umfasst ist, im Vergleich zu einem Fall, in welchem das Hindernis, welches niedriger als die vorbestimmte Höhe ist, nicht in den erfassten Hindernissen umfasst ist.

10. Vorrichtung zur Unterdrückung des Motordrehmoments (1) eines Fahrzeugs nach einem der Ansprüche 7 bis 9, wobei
die Bedingung zum Reduzieren des Motordrehmoments umfasst, dass ein Abstand zu dem Hindernis gleich wie oder kürzer als ein vorbestimmter Abstand ist; und
die Motordrehmoment-Unterdrückungseinheit (101) dazu eingerichtet ist, den vorbestimmten Abstand in einem Fall zu reduzieren, in welchem das Hindernis, welches niedriger als die vorbestimmte Höhe ist, in den erfassten Hindernissen umfasst ist, im Vergleich zu einem Fall, in welchem das Hindernis, welches niedriger als die vorbestimmte Höhe ist, nicht in den erfassten Hindernissen umfasst ist.

11. Vorrichtung zur Unterdrückung des Motordrehmoments (1) eines Fahrzeugs nach Anspruch 3, wobei, bei einem Neustart nach einer ausgeschalteten Zündung, wenn eine Anwesenheit des Hindernisses durch die Hinderniserfassungseinheit (201, 202) nicht erfasst wird oder das Fahrzeug zu dem Hindernis näher als der vorbestimmte Abstand ist, die Motordrehmoment-Unterdrückungseinheit das Motordrehmoment auf Grundlage einer Bedingung reduziert, welche sich von der vorbestimmten Bedingung unterscheidet.

12. Vorrichtung zur Unterdrückung des Motordrehmoments (1) eines Fahrzeugs nach Anspruch 3, wobei, bei einem Neustart nach einer ausgeschalteten Zündung, wenn eine Anwesenheit des Hindernisses durch die Hinderniserfassungseinheit (201, 202) nicht erfasst wird oder das Fahrzeug zu dem Hindernis näher als der vorbestimmte Abstand ist, die Motordrehmoment-Unterdrückungseinheit (101) das Motordrehmoment auf einer Bedingung reduziert, dass das Fahrzeug gestoppt wird und die Gasöffnung gleich wie oder größer als eine Gasöffnung ist, welche definiert ist als eine Gasöffnung, welche kleiner als die vorbestimmte Gasöffnung ist.

13. Vorrichtung zur Unterdrückung des Motordrehmoments (1) eines Fahrzeugs nach Anspruch 3, ferner umfassend eine Lenkungswinkel-Erfassungseinheit (114), welche dazu eingerichtet ist, einen Lenkungswinkel des Fahrzeugs zu erfassen,
wobei, in einem Fall, in welchem das Hindernis, welches durch die Hinderniserfassungseinheit (201, 202) erfasst wird, ein Hindernis umfasst, welches höher als die vorbestimmte Höhe ist, die Motordrehmoment-Unterdrückungseinheit (101) den vorbestimmten Abstand reduziert, wenn der Lenkungswinkel, welcher durch die Lenkungswinkel-Erfassungseinheit (114) erfasst wird, größer ist.

14. Vorrichtung zur Unterdrückung des Motordrehmoments (1) eines Fahrzeugs nach einem der Ansprüche 1 bis 13, ferner umfassend eine Hindernisabstand-Schätzungseinheit (201, 202), welche dazu eingerichtet ist, einen Abstand zu dem Hindernis zu schätzen; und eine Speichereinheit (201, 202), welche dazu eingerichtet ist, einen Abstand, welcher durch die Hindernisabstand-Schätzungseinheit (201, 202) geschätzt wird, zu speichern, wobei
die Hinderniserfassungseinheit (201, 202) ein externer Sensor ist, welcher ein vorbestimmten Sichtfeld oder einen vorbestimmten Sichtwinkel aufweist und in einer Fahrtrichtung des Fahrzeugs installiert ist; und
die Hindernisabstand-Schätzungseinheit (201, 202) eingerichtet ist zum
Erfassen des Abstands zu dem Hindernis auf Grundlage von Bildinformationen, welche von dem externen Sensor akquiriert werden, wenn das Hindernis in dem Blickfeld oder dem Blickwinkel liegt, und
Schätzen des Abstands zu dem Hindernis unter Verwendung eines Erfassungsabstands auf Grundlage der Bildinformationen, welche von dem externen Sensor akquiriert werden, und eines Fahrtabstands des Fahrzeugs nach einer Akquisition des Erfassungsabstands, wenn das Hindernis aus dem Blickfeld oder dem Blickwinkel ist.

## Revendications

1. Appareil de suppression de couple moteur (1) d'un véhicule comprenant :
une unité de détection d'obstacle (201, 202) configurée pour détecter la présence d'un obstacle dans une direction de déplacement d'un véhicule ;
une unité de détection de hauteur d'obstacle (201, 202) configurée pour détecter la hauteur de l'obstacle ; et
une unité de suppression de couple moteur (101) configurée pour réduire le couple moteur devant être généré effectivement par un moteur sous couple correspondant à une ouverture d'accélérateur dans une condition prédéterminée lorsque la présence de l'obstacle est détectée par l'unité de détection d'obstacle, et
différencier une condition pour réduire le couple moteur en fonction de la hauteur de l'obstacle détectée par l'unité de détection de hauteur d'obstacle.

2. Appareil de suppression de couple moteur (1) d'un véhicule selon la revendication 1, dans lequel l'unité de suppression de couple moteur (101) est configurée pour différencier la condition pour réduire le couple moteur entre :
un cas où seule la présence d'un obstacle plus haut qu'une hauteur prédéterminée est détectée ;
un cas où seule la présence d'un obstacle plus bas que la hauteur prédéterminée est détectée ; et
un cas où à la fois la présence d'un obstacle plus haut que la hauteur prédéterminée et la présence d'un obstacle plus bas que la hauteur prédéterminée sont détectées.

3. Appareil de suppression de couple moteur (1) d'un véhicule selon la revendication 2,
dans lequel l'unité de suppression de couple moteur (101) est configurée pour réduire le couple moteur lorsque : l'ouverture d'accélérateur est égale ou supérieure à une ouverture prédéterminée de l'accélérateur ; la vitesse du véhicule est égale ou inférieure à une vitesse prédéterminée du véhicule ; et la distance à l'obstacle est égale à ou plus courte qu'une distance prédéterminée, et
dans lequel, dans le cas où seule la présence d'un obstacle plus bas que la hauteur prédéterminée est détectée, l'unité de suppression de couple moteur (101) est configurée pour : réduire l'ouverture prédéterminée de l'accélérateur ; augmenter la vitesse prédéterminée du véhicule ; ou raccourcir la distance prédéterminée, par rapport au cas où seule la présence d'un obstacle plus haut que la hauteur prédéterminée est détectée.

4. Appareil de suppression de couple moteur (1) d'un véhicule selon la revendication 3, dans lequel, dans le cas où seule la présence d'un obstacle plus bas que la hauteur prédéterminée est détectée, l'unité de suppression de couple moteur (101) est configurée pour : réduire l'ouverture prédéterminée de l'accélérateur pendant la conduite ; augmenter la vitesse prédéterminée du véhicule pendant une marche arrière ; ou raccourcir la distance prédéterminée, par rapport au cas où seule la présence d'un obstacle plus haut que la hauteur prédéterminée est détectée.

5. Appareil de suppression de couple moteur (1) d'un véhicule selon l'une quelconque de la revendication 2 à la revendication 4, dans lequel, dans le cas où à la fois la présence d'un obstacle plus haut que la hauteur prédéterminée et la présence d'un obstacle plus bas que la hauteur prédéterminée sont détectées, l'unité de suppression de couple moteur (101) est configurée pour : réduire l'ouverture prédéterminée de l'accélérateur à mesure que le véhicule est plus proche de l'obstacle ; augmenter la vitesse prédéterminée du véhicule pendant une marche arrière ; ou raccourcir la distance prédéterminée, par rapport au cas où seule la présence d'un obstacle plus haut que la hauteur prédéterminée est détectée.

6. Appareil de suppression de couple moteur (1) d'un véhicule selon l'une quelconque de la revendication 2 à la revendication 5, dans lequel, dans le cas où à la fois la présence d'un obstacle plus haut que la hauteur prédéterminée et la présence d'un obstacle plus bas que la hauteur prédéterminée sont détectées, l'unité de suppression de couple moteur (101) est configurée pour étendre la distance prédéterminée pendant une marche arrière à mesure que la vitesse du véhicule est plus faible, par rapport au cas où seule la présence d'un obstacle plus bas que la hauteur prédéterminée est détectée.

7. Appareil de suppression de couple moteur (1) d'un véhicule selon la revendication 1, dans lequel l'unité de suppression de couple moteur (101) est configurée pour différencier la condition pour réduire le couple moteur entre :
un cas où un obstacle plus bas qu'une hauteur prédéterminée est inclus dans des obstacles détectés par l'unité de détection de hauteur d'obstacle ; et
un cas où l'obstacle plus bas que la hauteur prédéterminée n'est pas inclus dans les obstacles détectés par l'unité de détection de hauteur d'obstacle (201, 202).

8. Appareil de suppression de couple moteur (1) d'un véhicule selon la revendication 7, dans lequel :
la condition pour réduire le couple moteur inclut que l'ouverture de l'accélérateur soit égale ou supérieure à une ouverture prédéterminée de l'accélérateur ; et
l'unité de suppression de couple moteur (101) est configurée pour réduire l'ouverture prédéterminée de l'accélérateur dans un cas où l'obstacle plus bas que la hauteur prédéterminée est inclus dans les obstacles détectés, par rapport à un cas où l'obstacle plus bas que la hauteur prédéterminée n'est pas inclus dans les obstacles détectés.

9. Appareil de suppression de couple moteur (1) d'un véhicule selon la revendication 7 ou la revendication 8, dans lequel :
la condition pour réduire le couple moteur inclut que la vitesse du véhicule est égale ou inférieure à une vitesse prédéterminée du véhicule ; et
l'unité de suppression de couple moteur (101) est configurée pour augmenter la vitesse prédéterminée du véhicule dans un cas où l'obstacle plus bas que la hauteur prédéterminée est inclus dans les obstacles détectés, par rapport à un cas où l'obstacle plus bas que la hauteur prédéterminée n'est pas inclus dans les obstacles détectés.

10. Appareil de suppression de couple moteur (1) d'un véhicule selon l'une quelconque de la revendication 7 à la revendication 9, dans lequel :
la condition pour réduire le couple moteur inclut que la distance à l'obstacle est égale ou inférieure à une distance prédéterminée ; et
l'unité de suppression de couple moteur (101) est configurée pour raccourcir la distance prédéterminée dans un cas où l'obstacle plus bas que la hauteur prédéterminée est inclus dans les obstacles détectés, par rapport à un cas où l'obstacle plus bas que la hauteur prédéterminée n'est pas inclus dans les obstacles détectés.

11. Appareil de suppression de couple moteur (1) d'un véhicule selon la revendication 3, dans lequel, au redémarrage après coupure du contact, lorsque la présence de l'obstacle n'est pas détectée par l'unité de détection d'obstacle (201, 202) ou que le véhicule est plus proche de l'obstacle que la distance prédéterminée, l'unité de suppression de couple moteur réduit le couple moteur sur la base d'une condition différente de la condition prédéterminée.

12. Appareil de suppression de couple moteur (1) d'un véhicule selon la revendication 3, dans lequel, au redémarrage après coupure du contact, lorsque la présence de l'obstacle n'est pas détectée par l'unité de détection d'obstacle (201, 202) ou que le véhicule est plus proche de l'obstacle que la distance prédéterminée, l'unité de suppression de couple moteur (101) réduit le couple moteur à condition que le véhicule soit à l'arrêt et que l'ouverture d'accélérateur soit égale ou supérieure à une ouverture d'accélérateur qui est définie comme une ouverture d'accélérateur inférieure à l'ouverture prédéterminée de l'accélérateur.

13. Appareil de suppression de couple moteur (1) d'un véhicule selon la revendication 3, comprenant en outre une unité de détection d'angle de braquage (114) configurée pour détecter un angle de braquage du véhicule,
dans lequel, dans un cas où l'obstacle détecté par l'unité de détection d'obstacle (201, 202) inclut un obstacle plus haut que la hauteur prédéterminée, l'unité de suppression de couple moteur (101) raccourcit la distance prédéterminée à mesure que l'angle de braquage détecté par l'unité de détection d'angle de braquage (114) est plus grand.

14. Appareil de suppression de couple moteur (1) d'un véhicule selon l'une quelconque de la revendication 1 à la revendication 13, comprenant en outre : une unité d'estimation de distance d'obstacle (201, 202) configurée pour estimer la distance à l'obstacle ; et une unité de stockage (201, 202) configurée pour stocker la distance estimée par l'unité d'estimation de distance d'obstacle (201, 202), dans lequel :
l'unité de détection d'obstacle (201, 202) est un capteur externe qui a un champ de vision prédéterminé ou un angle de vision prédéterminé et est installé dans une direction de déplacement du véhicule ; et
l'unité d'estimation de distance d'obstacle (201, 202) est configurée pour
détecter la distance par rapport à l'obstacle sur la base d'informations d'imagerie acquises à partir du capteur externe lorsque l'obstacle se trouve dans le champ de vision ou l'angle de vision et
estimer la distance par rapport à l'obstacle en utilisant la distance de détection sur la base des informations d'imagerie acquises à partir du capteur externe et de la distance de déplacement du véhicule après acquisition de la distance de détection lorsque l'obstacle est hors du champ de vision ou de l'angle de vision.
